# EUROPEAN PATENT APPLICATION

(11) **EP 1 967 715 A2**
(43) Date of publication of application: **10.09.2008**
(21) Application number: 08101845.9
(22) Date of filing: 21.02.2008
(51) Int. Cl.: F02B 63/04

(54) **A machine for professional cleaning, with integrated alternating current electrical supply for accessories, and a kit for generating the supply**

(30) Priority: 23.02.2007 IT RE20070023
(71) Applicant: IP Cleaning S.p.A., 30026 Portogruaro (VE) (IT)
(72) Inventor: Vernazza, Giulio, 30026 Portogruaro (Venezia) (IT)
(74) Representative: Corradini, Corrado

(57) **Abstract**

An eiectrically-operated self-propelling work machine operating by direct current, comprising an external body, a generator (1) of direct current, housed internally of the body, for powering the machine, as well as operating organs destined to perform specific operations, the machine comprising an inverter (3) connected to the current generator (1) and destined to transform the direct current into alternating current of predetermined voltage, the alternating current being made available through an electric socket (8) fixed to the bodywork of the machine, a control unit (2) being programmed to open and close the connection between the inverter (3) and the generator (1) of direct current only in a presence of certain circumstances. The invention also relates to a kit for combining to a self-propelling work machine for making available at least a socket offering alternating current for enabling supply to be offered to external equipment.

## Description

The invention relates to an electrically-powered self-propelling work machine.

The invention also relates to a kit for combining with a self-propelling work machine, which makes available at least an alternating current socket for powering external apparatus.

In more detail, the present invention relates to direct-current electrically-powered sweeping and washing/drying machines, which might be provided with a tow hook for a service truck.

As is known, sweeping and washing/drying machines supplied with electrical current are provided with a direct current source are provided with a direct current generator, usually a battery of 24V accumulators which powers the machines themselves as well as the cleaning devices equipped thereon.

It often occurs that in places where these machines are often used, typically wide spaces in the open where an electrical energy source is not available, accessory operations to the machine's main task have to be performed, using separate electrical appliances normally available on the market that operate on alternating current, i.e. from the mains electrical supply.

Reference is particularly made, though not limitedly, to electrical appliances which work on alternating current and which perform strictly cleaning functions, such as for example vacuum cleaners, liquid aspirators, water-cleaners, etc.

It is convenient to use these cleaning devices in combination with the self-propelling cleaning machines as described above, so that places that are hard to access with the large machines can be cleaned.

It can also be convenient to use electrical equipment, once more operating on alternating current, such as drills, pneumatic hammers, electric screw-drivers, grass-cutters, etc., in order to perform maintenance tasks in zones where a source of electrical current is not available.

Substantially, then, it is often necessary to avail of electrical accessories which operate on alternating current and which are therefore not usable in combination with d.c. operated cleaning machines.

There is therefore a strongly-felt need to avail of a self-propelling work machine operating on direct current which can instantly make available auxiliary tension in alternating current for the use of various accessories to be connected to the machine itself, in the ambit of a simple and rational constructional solution.

The aim of the present invention is to provide an electrically-activated self-propelling work machine having structural and functional characteristics which satisfy the above-described needs and at the same time obviate the drawbacks mentioned with reference to the prior art.

A further aim is to make available to the operator a self-propelling work machine of any type which can be conveniently adapted to make available at least an alternating current socket for powering external apparatus.

The aim is attained by an electrically-activated self-propelling work machine in agreement with claim 1 and a kit that can be combined with a self-propelled work machine as defined in claim 7.

The dependent claims delineate preferred and particularly advantageous embodiments of the electrically-operated self-propelling work machine and the kit of the invention.

Further characteristics and advantages of the invention will emerge from a reading of the following description, provided by way of non-limiting example, with the aid of the figures of the accompanying drawing, in which:
figure 1 is an electrical diagram of a self-propelling work machine according to the present invention;
figure 2 is an electrical diagram of the functioning of a kit that can be combined with a self-propelling work machine according to the present invention.

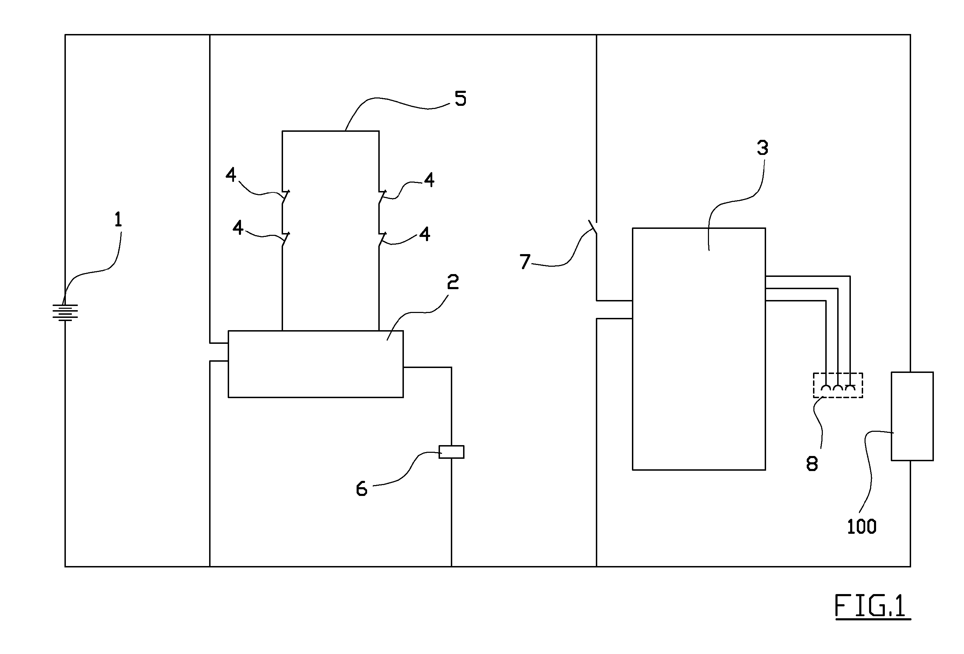

With reference at first to figure 1, it is observed that the self-propelling work machine of the present invention is powered by an electric motor 100 supplied by a direct current generator, in the illustrated embodiment a 24V battery, denoted by 1 and housed internally of the body of the machine itself.

Naturally the battery can be of any type and can generate a direct current at various tensions, such as: 12V, 24V, 36V or 48V.

Apart from the electric motor 100 for advancing the machine, a control unit, denoted by 2, is also connected to the battery 1, for controlling the energy dispensing of the battery 1.

In agreement with the present invention, the battery 1 is further connected to an inverter, denoted by 3, which transforms the direct current into alternating current at a selected tension and frequency, for example (but not only) 100V, 110V, 115V, 230V; with a frequency of 50 or 60 Hz.

The alternating current is made available by the inverter 3 via an electrical socket, denoted by 8, which is fixed to the bodywork of the machine in an easily-accessible position and preferable protected by a protection hatch configured such as to prevent accidental contact.

With the aim of enabling correct functioning of both the machine, by means of the motor 100 which is powered by direct current, and the electric socket 8, which has to supply alternating current, the control unit 2 comprises an electronic card, programmed for opening and closing the connection between the inverter 3 and the battery 1 according to requirements dictated by use.

In particular, the inverter 3 is powered by the battery 1, and alternating current can be made available at the socket 8, when certain conditions are found to exist which can be managed and modified via the electronic card 2.

By way of example, the card 2 can be programmed such as to close the electrical connection between the inverter 3 and the battery 1 only when the following circumstances obtain:
- when the motor 100 activating the machine is not absorbing energy; that is when the work machine is not functioning;
- when the battery 1 charge is above a certain predetermined level;
- when, in the presence of work machines having an on-board operator, the operator is not on board, which can be ascertained by use of a special sensor;
- other possible circumstances when it is judged to be advantageous.

Substantially, a chain of "enable" commands is included on the electronic card 2, each enable command corresponding to the existence of a certain circumstance and closing a corresponding electrical contract, denoted by 4, arranged along a circuit 5 connected to the electronic card 2.

In effect, the electrical contacts 4 are arranged in series and the circuit 5 therefore closes only when all the electrical contacts 4 are closed.

The following circumstances are among those which can be linked, according to a programming logic, to a respective electrical enabling contact command: the presence or absence of the ignition key (if the key is present the contact is closed, and if the key is absent the contact is left open), the activation or not of an emergency button (which if pressed immediately opens the contact 4, which is normally closed, and consequently the circuit 5).

In this way, when all the enable commands are activated, the electronic card 2 authorises the electrical connection between the inverter 3 and the battery 1, allowing dispensing of alternating current through the socket 8.

In particular, the connecting of the inverter 3 to the battery 1 is performed by a remote control switch, commanded by the electronic card 2 and constituted by a contactor, denoted by 6, which commands the activation of an electrical contact 7 for electrical connection between the inverter 3 and the battery 1.

Normally the contactor 6 keeps the contact 7 open, which is closed by the contactor 6 only when the contactor 6 receives an enable command from the electronic card 2 on receiving the programmed enable commands, i.e. when the circuit 5 is closed.

The inverter 3 functions in a known way and makes electrical current available at the socket 8, to which the electrical accessory devices mentioned herein above can be connected.

This enables the operator to perfect and complete the work of the work machine, in places which are inaccessible to the machine, by availing of apparatus, available on the market, in conditions of maximum safety.

By direct current generator, in the present invention reference is made to any system which generates direct current at the desired tension.

In particular, an internal combustion engine of known type can be used as a current generator, which via a suitable alternator and rectifier generates direct-current electricity at the desired tension.

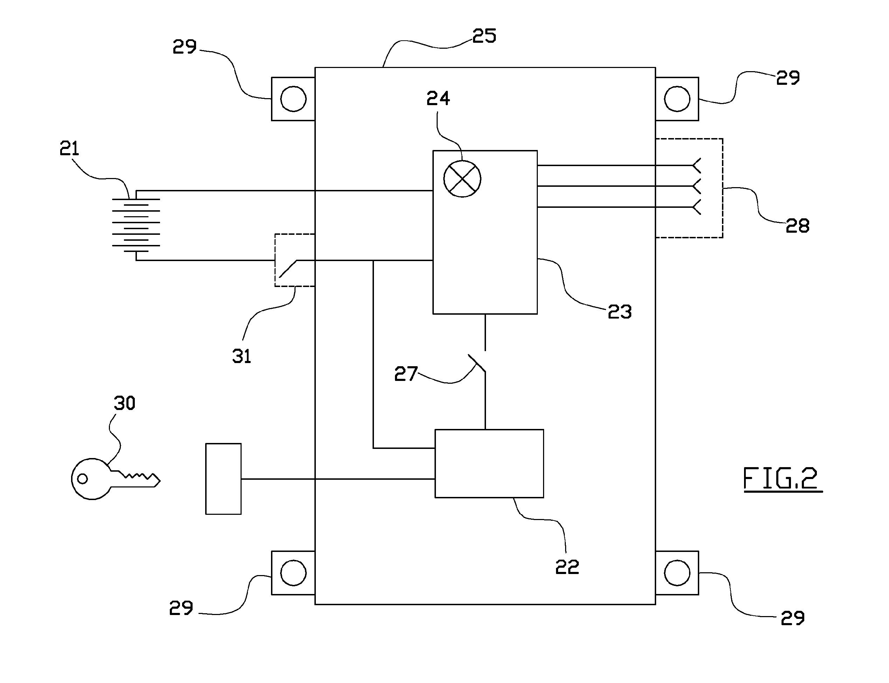

The invention also concerns a kit to be combined to a self-propelled work machine, which makes available at least an alternating-current take-off socket for powering external equipment; the electrical diagram of the kit is illustrated in figure 2.

The kit of figure 2 can be combined to a self-propelling work machine, provided with a generator 21 of direct current (for example a battery), and makes available at least a socket providing alternating current 28 for powering external equipment. In some realisations there can be more than one take-off socket offering alternating current.

The kit, from the mechanical point of view, comprises an external casing 25, provided with fastening means 29 to the work machine. The fastening means 29, purely by way of example, might be constituted by flanges affording holes for connecting screws. Other mechanical connecting means of the casing 25 to the machine body are possible, however.

From the electrical point of view, the kit includes an inverter 23, connectable to the generator of alternating current 21, and designed to transform the direct current into alternating current at a predetermined voltage, such that the alternating current is made available to at least an electric socket 28 associated to the casing 25 of the kit.

The inverter is connected to the battery, from which it takes its power supply, by an electrical connection provided with a switch 31, external of the casing 25 and activatable by the operator. In other embodiments of the invention, instead of the switch 31 any other sectioning means can be used which enables connecting the inverter to the battery.

In an alternative embodiment of the invention, the inverter 23 can be managed via a control unit 22 programmed to activate the inverter 23 only when predetermined operating conditions exist.

In this case too the inverter 23 is connected to the battery, but the alternating current supply occurs only when the control unit 22 activates a determined signal which it sends to the inverter 23.

By way of example, the control unit 22 can be programmed such that it activates the functioning of the inverter 23, possibly by closing a contact 27, according to the present of the ignition key 30 of the self-propelling vehicle to which the kit is associated.

Other activating logics for the inverter 23 are however programmable in the control unit also, but not only, similar to what is described with reference to the embodiment of figure 1.

The kit includes, internally of the casing 25, means for cooling 24, such as for example a fan, which are activated when a predetermined temperature threshold is reached.

An alternative embodiment has the means for cooling 24 integrated with the inverter 23.

As can be appreciated from what has been set out herein, the electrically-operated self-propelling work machine and the kit satisfy the requirements and obviates the drawbacks described in the introductory part of the present description, with reference to the prior art.

Obviously an expert in the sector, with the aim of meeting contingent and specific needs, might bring numerous modifications and variants to the electrically-operated self-propelling work machine and the kit of the invention, all comprised within the ambit of protection of the invention, as it is defined in the following claims.

## Claims

1. An electrically-operated self-propelling work machine operating by direct current, comprising an external body, a generator (1) of direct current, housed internally of the body, for powering the machine, as well as operating organs destined to perform specific operations, **characterised in that** it comprises an inverter (3) connected to the current generator (1) and destined to transform the direct current into an alternating current of predetermined voltage, the alternating current being made available through an electric socket (8) fixed to the body of the machine, a control unit (2) being programmed to open and close the connection between the inverter (3) and the generator (1) of direct current only in a presence of certain circumstances.

2. The machine of claim 1, wherein the alternating current is supplied at a tension selected from among 100V, 110V, 115V, 230V.

3. The machine of claim 1, wherein the control unit comprises an electronic card (2) programmed to close the connection between the inverter (3) and the current generator (1) only in a presence of certain circumstances.

4. The machine of claim 3, wherein the electronic card (2) comprises a circuit (5) on which contacts (4) are arranged in series, each contact (4) being commanded to close in a presence of a corresponding circumstance, the electronic card (2) closing the connection between the inverter (3) and the current generator (1) only when the circuit (5) is closed.

5. The machine of claim 3, wherein the circumstances that control the contacts (4) are one or more of following circumstances: a state of absorption of energy by the motor (100) powering the machine, a state of charge of the generator (1), a state of on-board presence of an operator.

6. The machine of claim 4, wherein the electronic card (2) is connected to a contactor (6) which opens and closes an electric contact (7) between the inverter (3) and the current generator (1).

7. A kit which can be combined to a self-propelling work machine, provided with a generator (21) of direct current, which makes available at least an socket (28) dispensing alternating current for supplying external equipment, **characterised in that** it comprises an external casing (25), provided with means for being fastened to the work machine, an inverter (23) connectable to the generator (21) of direct current and destined to transform the direct current into alternating current at a predetermined voltage, the alternating current being made available via at least an electric socket (28) associated to the casing (25) of the kit.

8. The kit of claim 7, wherein the inverter (23) is managed via a control unit (22), programmed to activate functioning of the inverter (23) only when predetermined operating conditions prevail.

9. The kit of claim 7 or 8, **characterised in that** means for cooling (24) are included internally of the casing (25), which means for cooling (24) can be activated when a predetermined temperature threshold is exceeded.

10. The kit of claim 9, **characterised in that** the means for cooling (24) are integrated with the inverter (23).
